(19) Europäisches Patentamt / European Patent Office / Office européen des brevets

(11) **EP 2 939 735 A1**

(12) **EUROPEAN PATENT APPLICATION**
published in accordance with Art. 153(4) EPC

(43) Date of publication:
04.11.2015 Bulletin 2015/45

(51) Int Cl.:
*B01J 23/30* (2006.01)     *B01D 53/94* (2006.01)
*B01J 37/00* (2006.01)     *B01J 37/04* (2006.01)
*B01J 37/08* (2006.01)     *F01N 3/10* (2006.01)

(21) Application number: 15734052.2

(22) Date of filing: 28.01.2015

(86) International application number:
PCT/JP2015/052337

(87) International publication number:
WO 2015/119015 (13.08.2015 Gazette 2015/32)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 05.02.2014 JP 2014020413

(71) Applicant: Ibiden Co., Ltd
Ogaki-shi, Gifu 503-8604 (JP)

(72) Inventors:
• **YOSHIMURA, Ken**
 **Ibi-gun**
 **Gifu 501-0695 (JP)**
• **YANG, Lu**
 **Ibi-gun**
 **Gifu 501-0695 (JP)**

(74) Representative: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(54) **HONEYCOMB CATALYST AND PROCESS FOR PRODUCING HONEYCOMB CATALYST**

(57) The present invention aims to provide a honeycomb catalyst that includes titanium oxide, vanadium oxide, and tungsten oxide, and exhibits sufficient NOx conversion ability although it contains a small amount of vanadium oxide. The honeycomb catalyst of the present invention contains: titanium oxide; vanadium oxide; and tungsten oxide, the honeycomb catalyst containing the vanadium oxide in an amount of 0.3 to 5.0 wt%, a peak attributable to a vanadium atom being spaced by an interatomic distance of 2.4 to 2.5 Å from a tungsten atom in a radial distribution function, the intensity of the peak being 0.05 Å or more in the radial distribution function per 1 wt% of the amount of the vanadium oxide in the honeycomb catalyst, the radial distribution function being obtained by Fourier transformation of an extended X-ray absorption fine structure (EXAFS) spectrum in a K-absorption edge of the tungsten in the honeycomb catalyst.

FIG.5

EP 2 939 735 A1

**Description**

TECHNICAL FIELD

The present invention relates to a honeycomb catalyst and a method for manufacturing a honeycomb catalyst.

BACKGROUND ART

Selective Catalytic Reduction (SCR) systems are known systems for reducing NOx in exhaust gas using ammonia into nitrogen and water. Vanadium pentoxide ($V_2O_5$) is known to have high NOx conversion ability, and honeycomb catalysts which contain $V_2O_5$ and tungsten trioxide ($WO_3$) on a titanium dioxide ($TiO_2$) support are used in SCR systems.

Such honeycomb catalysts (hereinafter, also referred to as "$TiO_2/V_2O_5/WO_3$ catalyst") in which vanadium oxide and tungsten oxide are supported on titanium oxide are disclosed in, for example, Patent Literature 1.

Patent Literature 1 discloses a catalyst (honeycomb catalyst) for flue gas denitrification. The catalyst is obtained by mixing and kneading titanium oxide powder, ammonium metatungstate, and water; granulating and drying the mixture into granules; grinding the granules into material powder; mixing the material powder with ammonium metavanadate into a catalyst paste; molding the catalyst paste into a honeycomb shape; and firing the honeycomb structure.

CITATION LIST

- Patent Literature

Patent Literature 1: JP H10-323570 A

SUMMARY OF INVENTION

- Technical Problem

The NOx conversion ability of $TiO_2/V_2O_5/WO_3$ catalysts varies depending on the amount of the catalyst species, i.e., vanadium and tungsten. If the amount of vanadium or tungsten or the ratio between vanadium and tungsten is inadequate, vanadium does not work effectively as an active site.

In particular, SCR reactions with the aid of a $TiO_2/V_2O_5/WO_3$ catalyst proceed through the reduction and oxidation of vanadium (pentavalent $\leftrightarrow$ tetravalent) on a $TiO_2$ support. This suggests that the amount of pentavalent vanadium ion affects the NOx conversion ability.

Unfortunately, the honeycomb catalyst of Patent Literature 1 does not show sufficient NOx conversion ability for the amount of vanadium.

This may be because of the following reason. In Patent Literature 1, titanium oxide powder and ammonium metatungstate are mixed and kneaded first, and then the mixture is combined with ammonium metavanadate. Presumably, such a process leads to formation of V-O-V bonds or W-O-W bonds on a $TiO_2$ support. Formation of V-O-V bonds in which adjacent vanadium atoms are bridged by an oxygen atom leads to crystallization of vanadium by heat or the like. Or, vanadium reacts with water to form a compound such as $VO(OH)_3$ and is vaporized, losing the catalytic function. Consequently, sufficient NOx conversion ability is not achieved.

The present invention was made to solve the above problem and aims to provide a honeycomb catalyst that includes titanium oxide, vanadium oxide, and tungsten oxide, and exhibits sufficient NOx conversion ability although it contains a small amount of vanadium oxide. The present invention also aims to provide a method for manufacturing such a honeycomb catalyst.

- Solution to Problem

As a result of intensive studies to solve the above problem, the present inventors found that when tungsten and vanadium are bound through "-W-O-V-O-W-O-V-" bonds on a $TiO_2$ support, vanadium atoms can be separated so that vanadium is dispersed, and that this allows the honeycomb catalyst to exhibit suitably high NOx conversion ability.

Specifically, a honeycomb catalyst of the present invention is a honeycomb catalyst containing: titanium oxide; vanadium oxide; and tungsten oxide, the honeycomb catalyst containing the vanadium oxide in an amount of 0.3 to 5.0 wt%, a peak attributable to a vanadium atom being spaced by an interatomic distance of 2.4 to 2.5 Å from a tungsten atom in a radial distribution function, the intensity of the peak being 0. 05 Å or more in the radial distribution function per 1 wt% of the amount of the vanadium oxide in the honeycomb catalyst, the radial distribution function being obtained by Fourier transformation of an extended X-ray absorption fine structure (EXAFS) spectrum in a K-absorption edge of the tungsten in the honeycomb catalyst.

In the present invention, an X-ray absorption fine structure (XAFS) obtained using synchrotron radiation is used to analyze the binding state of vanadium and tungsten.

An XAFS is a fine structure (oscillatory structure) observed in the absorption coefficient in the energy range extending for 1000 eV from the absorption edge in an absorption spectrum obtained by irradiating a substance with X-rays. The structure observed within a range of 50 to 1000 eV in the above energy range is called an extended X-ray absorption fine structure (EXAFS). In this range, the photoelectrons are scattered by adjacent atoms. Analysis of an EXAFS spectrum can identify nearest atoms to a certain atom and atoms adjacent to the nearest atoms, and the interatomic distances among these atoms or the like. Moreover, the amount of these atoms can be estimated from the intensities of peaks in a radial distribution function obtained by Fourier transformation of an EXAFS spectrum.

Presumably, the honeycomb catalyst of the present invention basically contains Ti-O-V-O-W bonds in which a vanadium atom and a tungsten atom are bridged by an oxygen atom. Analysis of an EXAFS spectrum is expected to determine the amount of bonds from a tungsten atom as a basis atom, such as W-O-V bonds and W-O-W bonds.

The honeycomb catalyst of the present invention has the following features : the honeycomb catalyst contains the vanadium oxide in an amount of 0.3 to 5.0 wt%; a peak attributable to a vanadium atom is spaced by an interatomic distance of 2.4 to 2.5 Å from a tungsten atom in a radial distribution function; the intensity of the peak is 0.05 Å or more in the radial distribution function per 1 wt% of the amount of the vanadium oxide in the honeycomb catalyst; and the radial distribution function is obtained by Fourier transformation of an EXAFS spectrum in a K-absorption edge of the tungsten in the honeycomb catalyst.

Since the interatomic distance between a tungsten atom and a vanadium atom in a W-O-V bond unit is 2.4 to 2.5 Å, the intensity of a peak attributable to a vanadium atom that is spaced by an interatomic distance of 2.4 to 2.5 Å from a tungsten atom indicates the abundance of W-O-V bonds. Namely, the honeycomb catalyst of the present invention contains a large amount of W-O-V bonds, which in turn indicates highly dispersed vanadium.

Typically, a honeycomb catalyst contains a larger amount of W-O-V bonds when it contains a larger amount of vanadium oxide. In contrast, the honeycomb catalyst of the present invention contains a relatively large amount of W-O-V bonds although it contains a small amount of vanadium oxide. Thus, the honeycomb catalyst of the present invention can make the most of vanadium so that it can exhibit high NOx conversion ability.

If the intensity of a peak attributable to vanadium of W-O-V bonds is less than 0.05 Å per 1 wt% of the vanadium oxide in the honeycomb catalyst, the amount of W-O-V bonds is small. Thus, sufficient NOx conversion ability is less likely to be achieved.

If the amount of the vanadium oxide in the honeycomb catalyst is less than 0.3 wt%, the amount of vanadium is too small. Thus, sufficient NOx conversion ability is less likely to be achieved. If the amount of the vanadium oxide in the honeycomb catalyst is more than 5.0 wt%, the amount of vanadium is too large. Thus, vanadium is not readily dispersed, failing to achieve proper enhancement in the NOx conversion ability of the honeycomb catalyst for the amount of vanadium.

The honeycomb catalyst of the present invention preferably has a weight ratio between the vanadium oxide and the tungsten oxide, vanadium oxide:tungsten oxide, of 1:1 to 1:13.

The honeycomb catalyst having a weight ratio between the vanadium oxide and the tungsten oxide within the above range contains a suitable amount of W-O-V bonds and thus well-dispersed vanadium. Such a honeycomb catalyst exhibits higher NOx conversion ability.

If the weight of the vanadium oxide is less than 1/13 the weight of the tungsten oxide, the amount of vanadium is too small. Thus, sufficient NOx conversion ability is less likely to be achieved. Or, too large an amount of the tungsten increases the cost.

If the weight of the vanadium oxide exceeds the weight of the tungsten oxide, a large amount of V-O-V bonds are present, leading to crystallization or volatilization of vanadium as mentioned above. Thus, the NOx conversion ability is less likely to be sufficient.

In the honeycomb catalyst of the present invention, a ratio of vanadium atoms to tungsten atoms, tungsten atoms/vanadium atoms, is preferably 0.5 to 5.0.

If the honeycomb catalyst contains a large amount of W-O-V bonds, vanadium is highly dispersed as mentioned above. Thus, the honeycomb catalyst suitably exhibits NOx conversion ability. The honeycomb catalyst preferably contains as small an amount of W-O-W bonds or V-O-V bonds as possible. Theoretically, if vanadium atoms are bound to tungsten atoms all through W-O-V bonds in the honeycomb catalyst, the NOx conversion ability can be most efficiently enhanced. In other words, the honeycomb catalyst containing vanadium atoms and tungsten atoms at a ratio closer to 1:1 more efficiently exerts vanadium-derived NOx conversion ability.

The NOx conversion ability can be enhanced when the ratio of vanadium atoms to tungsten atoms is within the above range.

If the ratio of vanadium atoms to tungsten atoms is less than 0.5, the proportion of V-O-V bonds is likely to increase due to a high proportion of vanadium atoms. In such a case, vanadium is crystallized or vaporized to have less contact with NOx. Thus, the honeycomb catalyst exerts insufficient NOx conversion ability for the amount of vanadium in the honeycomb catalyst.

If the ratio of vanadium atoms to tungsten atoms is more than 5.0, the amount of vanadium is too small. Thus, sufficient NOx conversion ability is less likely to be achieved. Or, too large an amount of tungsten increases the cost.

In the honeycomb catalyst of the present invention, provided that, in the radial distribution function, the intensity of the peak attributable to a vanadium atom that is spaced by an interatomic distance of 2.4 to 2.5 Å from a tungsten atom is Iv, and the intensity of a peak attributable to a tungsten atom that is spaced by an interatomic distance of 2.85 to 2.95 Å from a tungsten atom is Iw, then a ratio Iw/Iv is preferably 5.0 or lower.

Since the interatomic distance between a tungsten atom and the other tungsten atom in a W-O-W bond unit is 2.85 to 2. 95 Å, the intensity of the peak attributable to a tungsten atom that is spaced by an interatomic distance of 2.85 to 2.95 Å from the other tungsten atom indicates the abundance of W-O-W bonds.

Thus, the ratio Iw/Iv indicates the ratio of the abundance of W-O-W bonds to the abundance of W-O-V bonds.

A higher abundance of W-O-V bonds decreases the ratio Iw/Iv. If the ratio Iw/Iv is 5.0 or lower, the abundance of W-O-V bonds is sufficiently high. Thus, sufficiently high NOx conversion ability can be achieved.

The ratio Iw/Iv may be high in a case (1) of too large an abundance of W-O-W bonds or in a case (2) of too small an abundance of W-O-V bonds. Furthermore, in the case (2) of too small an abundance of W-O-V bonds, the ratio Iw/Iv may be high in a case (2-1) where the absolute amount of vanadium is small or in a case (2-2) where vanadium is dispersed insufficiently and is mostly present in the form of V-O-V bonds.

If the honeycomb catalyst has a ratio of the abundance of W-O-W bonds to the abundance of W-O-V bonds of higher than 5.0 due to at least one of the case (1) of too large an abundance of W-O-W bonds, the case (2-1) where the absolute amount of vanadium is small, and the case (2-2) where vanadium is dispersed insufficiently and is mostly present in the form of V-O-V bonds, the following disadvantages occur.

In the case (1) of too large an abundance of W-O-W bonds, too large an amount of tungsten increases the cost.

In the case (2-1) where the absolute amount of vanadium is small, sufficient NOx conversion ability is less likely to be achieved due to too small an amount of vanadium.

In the case (2-2) where vanadium is dispersed insufficiently and is mostly present in the form of V-O-V bonds, vanadium is crystallized or vaporized to have less contact with NOx as mentioned above. Thus, sufficient NOx conversion ability is less likely to be achieved.

In the honeycomb catalyst of the present invention, the extended X-ray absorption fine structure (EXAFS) spectrum at a tungsten K-absorption edge is analyzed using an XAFS analysis software "Athena" to obtain the radial distribution function.

"Athena" is a widely used software with which a radial distribution function can be readily obtained. The data can be readily analyzed by an XAFS analysis software "Artemis".

In the honeycomb catalyst of the present invention, an amount of hydrogen consumed for reducing vanadium in hydrogen temperature-programmed reduction ($H_2$-TPR) is preferably 0.6 mmol or more per gram of the honeycomb catalyst.

The amount of vanadium contributing to NOx conversion can be determined by measuring the amount of hydrogen consumed for reducing vanadium in hydrogen temperature-programmed reduction ($H_2$-TPR). In other words, a larger consumption of hydrogen indicates a larger amount of vanadium contributing to NOx conversion, which in turn indicates better NOx conversion ability.

The honeycomb catalyst can have higher NOx conversion ability when it is designed such that the amount of hydrogen consumed for reducing vanadium in hydrogen temperature-programmed reduction is 0.6 mmol or more per gram of the honeycomb catalyst.

Preferably, the honeycomb catalyst of the present invention further contains at least one inorganic binder selected from the group consisting of alumina sol, silica sol, titania sol, water glass, sepiolite, attapulgite, bentonite, and boehmite.

The honeycomb catalyst can be reinforced when it contains such an inorganic binder.

A method for manufacturing a honeycomb catalyst of the present invention includes: a mixing and kneading step of mixing and kneading titanium oxide, a vanadium material, and a tungsten material to prepare a kneaded mixture; a molding step of molding the kneaded mixture into a honeycomb shape to prepare a honeycomb molded body; and a firing step of firing the honeycomb molded body, the mixing and kneading step including mixing a tungsten material solution in which the tungsten material is dissolved, the titanium oxide, and the vanadium material.

In methods for manufacturing a honeycomb catalyst in which titanium oxide and a tungsten material are first mixed and kneaded; the mixture is granulated and dried to prepare granules; the granules are ground to prepare material powder; and the powder is mixed with a vanadium material, as in the method of Patent Literature 1, W-O-V bonds are less likely to be formed whereas W-O-W bonds and V-O-V bonds are likely to be formed.

In contrast, according to the method for manufacturing a honeycomb catalyst of the present invention, titanium oxide and a tungsten material are not first mixed and kneaded. Instead, a tungsten material solution, titanium oxide, and a vanadium material are mixed in the mixing and kneading step. In microscopic observation of the particles forming the resulting kneaded mixture, the tungsten material and the vanadium material are likely to be evenly dispersed on the surface of the titanium oxide. Thus, presumably a honeycomb catalyst manufactured by the method for manufacturing a honeycomb catalyst of the present invention is less likely to contain W-O-W bonds and V-O-V bonds.

Moreover, in the method for manufacturing a honeycomb catalyst of the present invention, the tungsten material is not solid but a solution in which the tungsten material is dissolved. Such a method enables sufficiently uniform dispersion of the tungsten material and the vanadium material on the surface of the titanium oxide. Thus, a kneaded mixture can be prepared in which the vanadium material is fairly evenly distributed. A honeycomb catalyst manufactured from such a kneaded mixture is likely to contain highly dispersed vanadium. Thus, a honeycomb catalyst having sufficiently high NOx conversion ability for the amount of vanadium can be manufactured.

In the method for manufacturing a honeycomb catalyst of the present invention, preferably the mixing and kneading step includes: dissolving the tungsten material which is solid in an amine solution and/or water to prepare the tungsten material solution; dissolving the vanadium material which is solid in an amine solution and/or water to prepare a vanadium material solution; and mixing the tungsten material solution, the titanium oxide, and the vanadium material solution.

In the case where the tungsten material and the vanadium material are solid, these materials or the like can be uniformly mixed when the respective materials are dissolved in solvents into a tungsten material solution and a vanadium material solution. Accordingly, a kneaded mixture can be prepared in which the vanadium material is fairly evenly distributed.

Thus, a honeycomb catalyst having sufficiently high NOx conversion ability for the amount of vanadium can be manufactured.

In the method for manufacturing the honeycomb catalyst of the present invention, the amine solution is preferably a solution containing at least one selected from the group consisting of dimethylamine, methylamine, monoethanolamine, diethanolamine, trimethylamine, ethylamine, propylamine, and butylamine. Such an amine solution can readily dissolve the tungsten material and the vanadium material.

The use of the tungsten material solution and the vanadium material solution allows for manufacturing of a kneaded mixture in which the vanadium material is fairly evenly distributed as mentioned above. Thus, a honeycomb catalyst having sufficiently high NOx conversion ability for the amount of vanadium can be manufactured.

In the method for manufacturing a honeycomb catalyst of the present invention, the tungsten material is preferably at least one selected from the group consisting of tungsten trioxide, ammonium paratungstate, and ammonium metatungstate.

The tungsten material consisting of the above material(s) can be readily dissolved to be a tungsten material solution. The use of the tungsten material solution allows for manufacturing of a kneaded mixture in which the vanadium material is fairly evenly distributed as mentioned above. Thus, a honeycomb catalyst having sufficiently high NOx conversion ability for the amount of vanadium can be manufactured.

In the method for manufacturing a honeycomb catalyst of the present invention, the vanadium material is preferably at least one selected from the group consisting of ammonium metavanadate, vanadyl sulfate, and vanadyl oxalate.

A honeycomb catalyst can be efficiently manufactured owing to good handleability of ammonium metavanadate, vanadyl sulfate, and vanadyl oxalate.

In the method for manufacturing a honeycomb catalyst of the present invention, the titanium oxide is preferably anatase-type titanium oxide.

A honeycomb catalyst containing anatase-type titanium oxide is likely to have a large specific surface area and readily allows vanadium to be highly dispersed. Thus, a honeycomb catalyst having excellent

NOx conversion ability can be manufactured.

BRIEF DESCRIPTION OF DRAWINGS

Fig. 1 is a reaction scheme schematically showing an SCR reaction with the aid of a $TiO_2/V_2O_5/WO_3$ catalyst.
Fig. 2(a) is a schematic diagram schematically showing an exemplary embodiment of vanadium-tungsten bonds on the surface of a honeycomb catalyst in which vanadium is ideally dispersed. Fig. 2(b) is a schematic diagram schematically showing an exemplary embodiment of vanadium-tungsten bonds on the surface of a honeycomb catalyst in which vanadium is not sufficiently dispersed.
Fig. 3 is a diagram schematically showing a radial distribution function obtained by Fourier transformation of an EXAFS spectrum in a K-absorption edge of the tungsten in a $TiO_2/V_2O_5/WO_3$ catalyst.
Fig. 4 (a) is a perspective view schematically showing an example of the honeycomb catalyst of the present invention.

Fig. 4(b) is an A-A line cross-sectional view of Fig. 4(a).

Fig. 5 is a diagram showing a radial distribution function obtained by Fourier transformation of a spectrum in a K-absorption edge of the tungsten, measured with an XAFS analyzer, in the honeycomb catalysts manufactured in Examples 1 and 2 and Comparative Example 1.

Fig. 6 is a plot diagram showing evaluation results of NOx conversion rates. The horizontal axis expresses the temperature of simulated gas, and the vertical axis expresses the NOx conversion rate.

Fig. 7 is a diagram showing the results of measuring, by $H_2$-TPR, the amounts of hydrogen consumed for reducing vanadium in the honeycomb catalysts manufactured in Examples 1 and 2 and Comparative Example 1, and in these catalysts after they are heated at 550°C for 100 hours.

## DESCRIPTION OF EMBODIMENTS

The present invention will be specifically described below but is not limited to the description. The present invention may be applicable with appropriate modification as long as the gist of the invention is not changed.

The honeycomb catalyst of the present invention includes titanium oxide, vanadium oxide, and tungsten oxide.

First, an SCR reaction with the aid of a $TiO_2/V_2O_5/WO_3$ catalyst will be described.

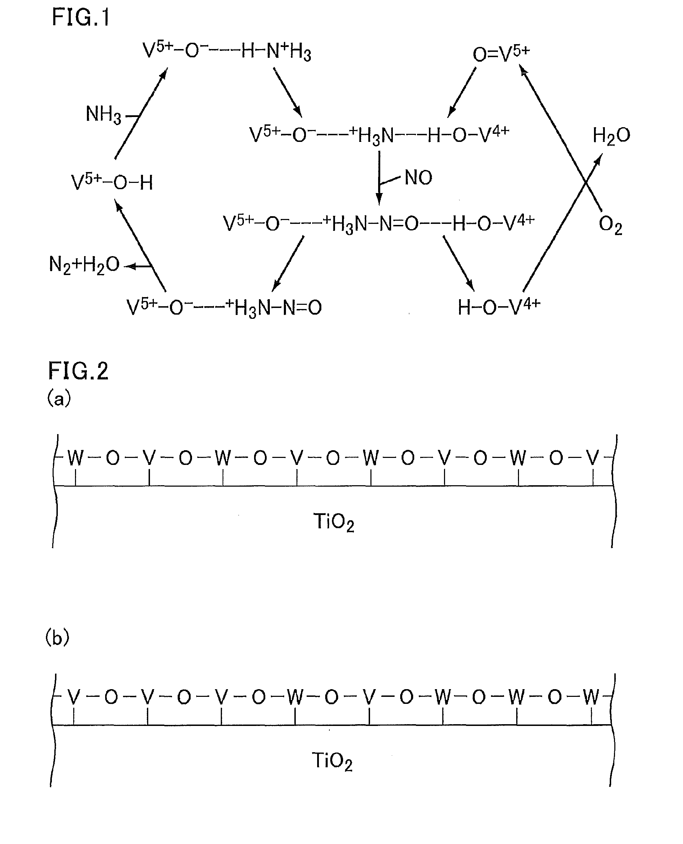

Fig. 1 is a reaction scheme schematically showing an SCR reaction with the aid of a $TiO_2/V_2O_5/WO_3$ catalyst.

As shown in Fig. 1, in an SCR reaction, ammonia ($NH_3$) is chemically reacted with nitrogen oxide (NOx) to form nitrogen ($N_2$) and water ($H_2O$). The vanadium act as a catalyst in this reaction. This reaction proceeds through the reduction and oxidation of vanadium (pentavalent ↔ tetravalent).

Thus, the reactivity of an SCR reaction with the aid of a $TiO_2/V_2O_5/WO_3$ catalyst can be enhanced by increasing the amount of pentavalent vanadium ion on a $TiO_2$ support.

Next, vanadium-tungsten bonds on the surface of a $TiO_2/V_2O_5/WO_3$ catalyst will be described.

Fig. 2(a) is a schematic diagram schematically showing an exemplary embodiment of vanadium-tungsten bonds on the surface of a honeycomb catalyst in which vanadium is ideally dispersed.

Fig. 2(b) is a schematic diagram schematically showing an exemplary embodiment of vanadium-tungsten bonds on the surface of a honeycomb catalyst in which vanadium is not sufficiently dispersed.

As shown in Fig. 2(a) and Fig.2(b), vanadium and tungsten are bound to each other with oxygen therebetween on a $TiO_2$ support on the surface of the honeycomb catalyst.

When vanadium is not sufficiently dispersed, a larger amount of V-O-V bonds are formed as shown in Fig. 2(b). Formation of V-O-V bonds in which adjacent vanadium atoms are bridged by an oxygen atom leads to crystallization of vanadium by heat or the like. Or, vanadium reacts with water to form a compound such as $VO(OH)_3$ and is vaporized, losing the catalytic function. A honeycomb catalyst containing a large amount of V-O-V bonds as shown in Fig. 2 (b) is considered to have insufficient NOx conversion ability.

In contrast, ideal dispersion of vanadium leads to formation of a large amount of W-O-V bonds as shown in Fig. 2(a). Vanadium present in the form of W-O-V bonds is less likely to be crystalized or vaporized, and can be present as pentavalent vanadium ion on a $TiO_2$ support. Thus, a honeycomb catalyst as shown in Fig. 2(a) can exhibit sufficient NOx conversion ability.

Most ideally, vanadium and tungsten are bound at a ratio of 1:1 with oxygen therebetween, which maximizes the efficiency of the NOx conversion ability.

In order to increase the amount of pentavalent vanadium ion on a $TiO_2$ support, the honeycomb catalyst of the present invention has the following features: the honeycomb catalyst contains the vanadium oxide in an amount of 0.3 to 5.0 wt%; a peak attributable to a vanadium atom is spaced by an interatomic distance of 2.4 to 2.5 Å from a tungsten atom in a radial distribution function; the intensity of the peak is 0.05 Å or more in the radial distribution function per 1 wt% of the amount of the vanadium oxide in the honeycomb catalyst; and the radial distribution function is obtained by Fourier transformation of an extended X-ray absorption fine structure (EXAFS) spectrum in a K-absorption edge of the tungsten in the honeycomb catalyst.

In the present invention, the binding state of vanadium and tungsten is analyzed by an X-ray absorption fine structure (XAFS) obtained using synchrotron radiation as mentioned above.

A radial distribution function obtained by Fourier transformation of an EXAFS spectrum will be described.

Preferably, "Athena" (Demeter ver.0.9.13.1) is used as an analysis software.

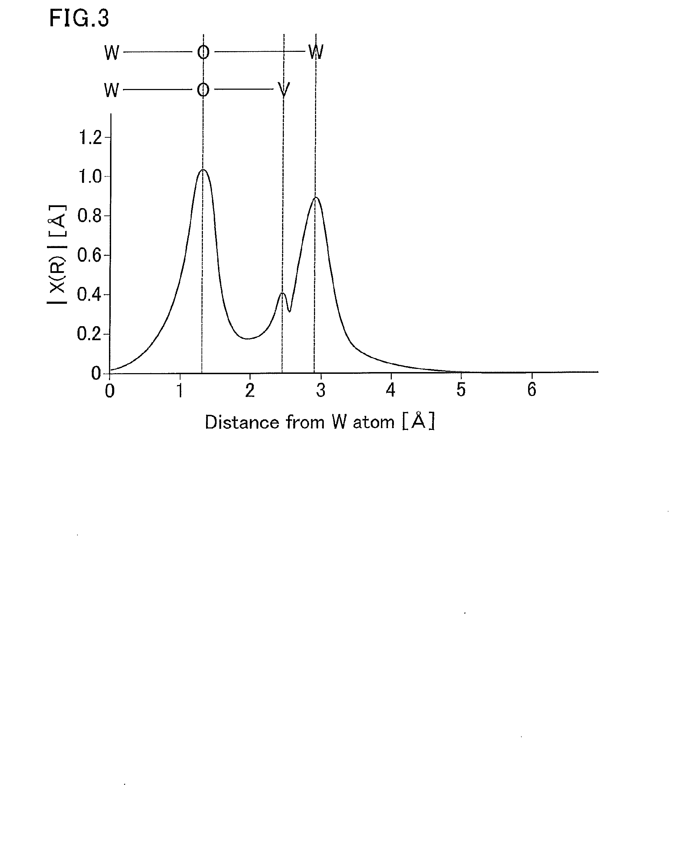

Fig. 3 is a diagram schematically showing a radial distribution function obtained by Fourier transformation of an EXAFS spectrum in a K-absorption edge of the tungsten in a $TiO_2/V_2O_5/WO_3$ catalyst.

As mentioned above, titanium atoms, vanadium atoms, and tungsten atoms are presumed to be bound to one another with oxygen atoms therebetween to form Ti-O-V-O-W bonds, Ti-O-W-O-W bonds, Ti-O-V-O-V bonds, or the like on the surface of a $TiO_2/V_2O_5/WO_3$ catalyst. Regarding the atoms which are surrounding and also directly or indirectly bound a tungsten atom, the tungsten atom is bound to an oxygen atom and bridged by the oxygen atom to a vanadium atom or a tungsten atom.

The abundance of an oxygen atom bound to a tungsten atom and the kind and abundance of atoms bound to the oxygen atom can be determined from the radial distribution function shown in Fig. 3.

The horizontal axis of the radial distribution function shown in Fig. 3 expresses an interatomic distance (A) from a tungsten atom. Since an interatomic bond distance is specific to the bound atom, an atom can be identified based on the location of its peak.

The length of a bond between atoms can be determined by preliminary measuring the EXAFS spectrum using a reference substance.

For example, in Fig. 3, the peak spaced by an interatomic distance of 1.2 to 1.3 Å from a tungsten atom is a peak of an oxygen atom bound to the tungsten atom. The peak spaced by an interatomic distance of 2.4 to 2.5 Å from a tungsten atom is a peak of a vanadium atom bound to the oxygen atom. The peak spaced by an interatomic distance of 2.85 to 2.95 Å from a tungsten atom is a peak of a tungsten atom bound to the oxygen atom.

A higher peak intensity on the vertical axis of the radial distribution function shown in Fig. 3 indicates a larger amount of the atom, whereas a lower peak intensity indicates a smaller amount of the atom. That is, the intensity of the peak spaced by an interatomic distance of 2.4 to 2.5 Å from a tungsten atom is a measure of the amount of vanadium atoms in W-O-V bonds. Thus, a relative abundance of W-O-V bonds can be calculated from the intensity of the peak spaced by an interatomic distance of 2.4 to 2.5 Å.

A relative abundance of W-O-W bonds can be calculated from the intensity of the peak spaced by an interatomic distance of 2.85 to 2.95 Å from a tungsten atom.

The intensities of the peaks do not represent the absolute numbers of W-O-V bonds, W-O-W bonds, or the like. For example, if the number of moles of W-O-V bonds is the same as that of W-O-W bonds, the intensity of the peak that is spaced by an interatomic distance of 2.4 to 2.5 Å from a tungsten atom differs from the intensity of the peak that is spaced by an interatomic distance of 2.85 to 2.95 Å from a tungsten atom.

Comparison between the peaks indicating W-O-V bonds can reveal the relation in terms of the number of W-O-V bonds. Similarly, comparison between the peaks indicating W-O-W bonds can reveal the relation in terms of the number of W-O-W bonds.

However, comparison between the intensity of a W-O-V bond peak and the intensity of a W-O-W bond peak does not reveal which of the bonds is greater in number.

The term "abundance" herein refers to the relation in terms of the number of a particular bond between peaks indicating the bond appearing at the same interatomic distance from a tungsten atom, not the proportion of a certain bond among all the bonds such as W-O-V bonds.

In the honeycomb catalyst of the present invention, the intensity (hereinafter, also referred to as Iv) of a peak attributable to a vanadium atom that is spaced by an interatomic distance of 2.4 to 2.5 Å from a tungsten atom is 0.05 Å or more in a radial distribution function per 1 wt% of the vanadium oxide. The radial distribution function is obtained by Fourier transformation of an EXAFS spectrum in a K-absorption edge of the tungsten in the honeycomb catalyst. That is, the value obtained by dividing Iv with the amount (wt%) of the vanadium oxide in the honeycomb catalyst is 0.05 Å/wt% or more.

Thus, the honeycomb catalyst of the present invention contains highly dispersed vanadium and a large amount of W-O-V bonds, whereby achieving sufficient NOx conversion ability.

The Iv is more preferably 0. 05 to 0.5 Å per 1 wt% of the vanadium oxide.

If the Iv is less than 0.05 Å per 1 wt% of the vanadium oxide in the honeycomb catalyst, the amount of W-O-V bonds is small. Thus, sufficient NOx conversion ability is less likely to be achieved.

The amount of the vanadium oxide in the honeycomb catalyst will be described in detail below. In the honeycomb catalyst of the present invention, the amount of the vanadium oxide is 0.3 to 5.0 wt%. The Iv is more preferably 0.06 to 0.1 Å per 1 wt% of the vanadium oxide in the honeycomb catalyst.

In the honeycomb catalyst of the present invention, the intensity (hereinafter, also referred to as Iw) of a peak attributable to a tungsten atom that is spaced by an interatomic distance of 2.85 to 2.95 Å from a tungsten atom is preferably 0.1 Å or less, more preferably 0.01 to 0.08 Å per 1 wt% of the tungsten oxide in the honeycomb catalyst. If the Iw exceeds 0.1 Å per 1 wt% of the tungsten oxide in the honeycomb catalyst, the amount of tungsten is too large, leading to a cost increase.

In the honeycomb catalyst of the present invention, a ratio of Iw/Iv is preferably 5.0 or lower, more preferably 1.0 to 4.5.

If the ratio Iw/Iv is 5.0 or lower, the abundance of W-O-V bonds is sufficiently high. Thus, sufficiently high NOx conversion ability can be achieved.

The ratio Iw/Iv may be high in a case (1) of too large an abundance of W-O-W bonds or in a case (2) of too small an abundance of W-O-V bonds. Furthermore, in the case (2) of too small an abundance of W-O-V bonds, the ratio Iw/Iv may be high in a case (2-1) where the absolute amount of vanadium is small or in a case (2-2) where vanadium is dispersed insufficiently and is mostly present in the form of V-O-V bonds.

If the honeycomb catalyst has a ratio of the abundance of W-O-W bonds to the abundance of W-O-V bonds of higher than 5.0 due to at least one of the case (1) of too large an abundance of W-O-W bonds, the case (2-1) where the absolute amount of vanadium is small, and the case (2-2) where vanadium is dispersed insufficiently and is mostly present in the form of V-O-V bonds, the following disadvantages occur.

In the case (1) of too large an abundance of W-O-W bonds, too large an amount of tungsten increases the cost.

In the case (2-1) where the absolute amount of vanadium is small, sufficient NOx conversion ability is less likely to be achieved due to too small an amount of vanadium.

In the case (2-2) where vanadium is dispersed insufficiently and is mostly present in the form of V-O-V bonds, vanadium is crystallized or vaporized to have less contact with NOx as mentioned above. Thus, sufficient NOx conversion ability is less likely to be achieved.

In the honeycomb catalyst of the present invention, an amount of hydrogen consumed for reducing vanadium in hydrogen temperature-programmed reduction ($H_2$-TPR) is preferably 0. 6 mmol or more per gram of the honeycomb catalyst.

The amount of vanadium contributing to NOx conversion can be determined by measuring the amount of hydrogen consumed for reducing vanadium in hydrogen temperature-programmed reduction ($H_2$-TPR). In other words, a larger consumption of hydrogen indicates a larger amount of vanadium contributing to NOx conversion, which in turn indicates better NOx conversion ability.

The honeycomb catalyst can have higher NOx conversion ability when it is designed such that the amount of hydrogen consumed for reducing vanadium in hydrogen temperature-programmed reduction is 0.6 mmol or more per gram of the honeycomb catalyst.

Next, the shape or the like of the honeycomb catalyst of the present invention will be described with reference to drawings.

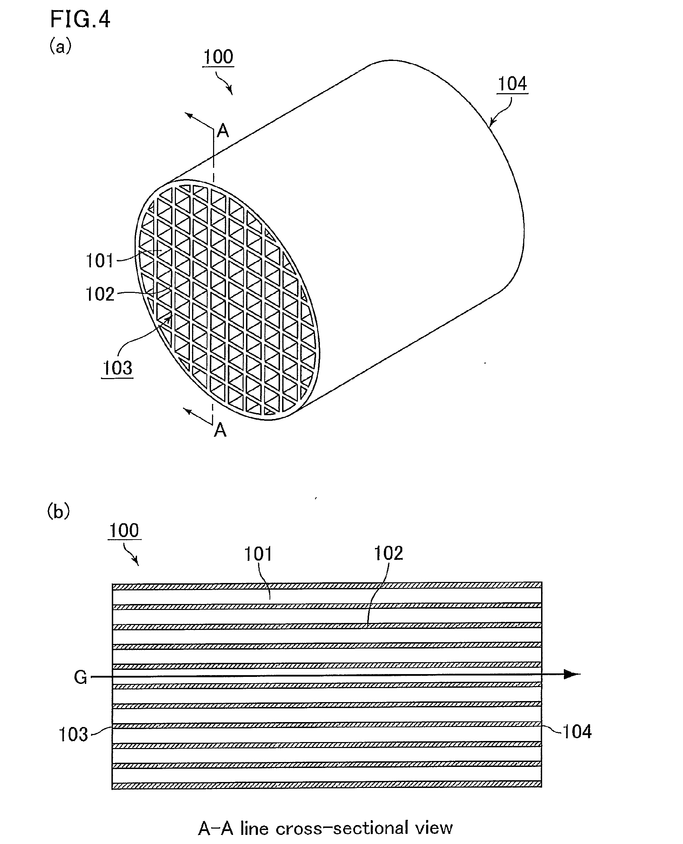

Fig. 4 (a) is a perspective view schematically showing an example of the honeycomb catalyst of the present invention. Fig. 4(b) is an A-A line cross-sectional view of Fig. 4(a).

A honeycomb catalyst 100 shown in Fig. 4(a) includes a plurality of through holes 101 each having open ends on both sides. The through holes 101 are longitudinally in parallel with one another with partitions 102 individually interposed therebetween. The honeycomb catalyst 100 has a round pillar shape.

The shape of the honeycomb catalyst of the present invention is not limited to a round pillar, and may be a rectangular pillar, a cylindroid, a pillar with a racetrack end face, a rectangular pillar with chamfered edges (for example, a triangular pillar with chamfered edges), or the like.

Next, the mechanism of how the honeycomb catalyst 100 converts NOx in exhaust gas will be described. As shown in Fig. 4(b), exhaust gas G (in Fig. 4(b), exhaust gas is indicated by "G" and the flow of exhaust gas is indicated by arrows) flowing into any of the through holes 101 of the honeycomb catalyst 100 from one end 103 (end on the exhaust gas flow-in side) contacts catalyst species upon passing through the through hole 101, whereby NOx in the exhaust gas G is converted. The converted exhaust gas G is emitted from another end 104 (end on the exhaust gas flow-out side) of the through hole 101.

Accordingly, the use of the honeycomb catalyst 100 allows for good conversion of NOx in exhaust gas.

The through holes 101 in the honeycomb catalyst each have a rectangular pillar shape in Fig. 4 (a) and Fig. 4 (b); however, the shape of the through holes is not limited to a rectangular pillar but may be a triangular pillar, a hexagonal pillar, or the like.

The honeycomb catalyst 100, which is a $TiO_2/V_2O_5/WO_3$ catalyst, includes titanium oxide, vanadium oxide, and tungsten oxide.

The honeycomb catalyst 100 contains vanadium oxide in an amount of 0.3 to 5.0 wt%. Preferably, the honeycomb catalyst 100 contains vanadium oxide in an amount of 0.3 to 3.0 wt%.

The honeycomb catalyst 100 contains a relatively large amount of W-O-V bonds although it contains a small amount of vanadium oxide. Thus, the honeycomb catalyst 100 can make the most of vanadium so that it can exhibit high NOx conversion ability.

If the amount of the vanadium oxide in the honeycomb catalyst 100 is less than 0.3 wt%, the amount of vanadium is too small. Thus, sufficient NOx conversion ability is less likely to be achieved. If the amount of the vanadium oxide in the honeycomb catalyst 100 is more than 5.0 wt%, the amount of vanadium is too large. Thus, vanadium is not readily dispersed, failing to achieve proper enhancement in the NOx conversion ability of the honeycomb catalyst for the amount of vanadium.

The honeycomb catalyst 100 preferably contains tungsten oxide in an amount of 3.0 to 10.0 wt%.

If the amount of the tungsten oxide in the honeycomb catalyst 100 is less than 3.0 wt%, vanadium is poorly dispersed due to too small an amount of the tungsten oxide, resulting in high abundance of V-O-V bonds. Thus, sufficient NOx conversion ability is less likely to be achieved.

If the amount of the tungsten oxide in the honeycomb catalyst 100 exceeds 10.0 wt%, the amount of tungsten is too high, leading to a cost increase.

The honeycomb catalyst 100 preferably contains titanium oxide in an amount of 70 to 90 wt%.

If the amount of the titanium oxide in the honeycomb catalyst 100 is less than 70 wt%, the weight of the titanium oxide is too small. Thus, the amounts of vanadium atoms and tungsten atoms decrease on the titanium oxide, reducing the amount of W-O-V bonds. Consequently, sufficient NOx conversion ability is less likely to be achieved.

If the amount of the titanium oxide in the honeycomb catalyst 100 exceeds 90 wt%, the weights of vanadium oxide and tungsten oxide in the honeycomb catalyst 100 decrease. Thus, sufficient NOx conversion ability is less likely to be achieved.

The honeycomb catalyst 100 has a weight ratio between the vanadium oxide and the tungsten oxide, vanadium oxide:tungsten oxide, of preferably 1:1 to 1:13, more preferably 1:1 to 1:10.

If the weight ratio between the vanadium oxide and the tungsten oxide is within the above range, W-O-V bonds are suitably present, presumably allowing vanadium to be dispersed. Thus, the honeycomb catalyst has a higher NOx conversion ability.

If the weight of the vanadium oxide is less than 1/13 the weight of the tungsten oxide, the amount of vanadium is too small. Thus, sufficient NOx conversion ability is less likely to be achieved. Or, too large an amount of tungsten increases the cost.

If the weight of the vanadium oxide exceeds the weight of the tungsten oxide, a large amount of V-O-V bonds are present, leading to crystallization or volatilization of vanadium as mentioned above. Thus, the NOx conversion ability is less likely to be sufficient.

In the honeycomb catalyst 100, a ratio of vanadium atoms to tungsten atoms, tungsten atom/vanadium atom, is preferably 0.5 to 5.0, more preferably 0.5 to 1.5.

Herein, the expression "a ratio of vanadium atoms to tungsten atoms" refers to a molar ratio between vanadium atom and tungsten atom.

If the honeycomb catalyst 100 contains a large amount of W-O-V bonds, vanadium is highly dispersed as mentioned above. Thus, the honeycomb catalyst 100 suitably exhibits NOx conversion ability. The honeycomb catalyst 100 preferably contains as small an amount of W-O-W bonds or V-O-V bonds as possible. Theoretically, if vanadium atoms are bound to tungsten atoms all through W-O-V bonds in the honeycomb catalyst 100, the NOx conversion ability can be most efficiently enhanced. In other words, the honeycomb catalyst 100 containing vanadium atoms and tungsten atoms at a ratio closer to 1:1 more efficiently exerts vanadium-derived NOx conversion ability.

The NOx conversion ability can be enhanced when the ratio of vanadium atoms to tungsten atoms is within the above range.

If the ratio of vanadium atoms to tungsten atoms is less than 0.5, the proportion of V-O-V bonds is likely to increase due to a high proportion of vanadium atoms. In such a case, vanadium is crystallized or vaporized to have less contact with NOx. Thus, the honeycomb catalyst exerts insufficient NOx conversion ability for the amount of vanadium in the honeycomb catalyst.

If the ratio of vahadium atoms to tungsten atoms is more than 5.0, the amount of vanadium is too small. Thus, sufficient NOx conversion ability is less likely to be achieved. Or, too large an amount of tungsten increases the cost.

Preferably, the honeycomb catalyst 100 further contains an inorganic binder. Non-limiting examples of the inorganic binder include alumina sol, silica sol, titania sol, water glass, sepiolite, attapulgite, bentonite, and boehmite. Each of these inorganic binders may be used alone, or two or more kinds thereof may be used.

The honeycomb catalyst 100 is reinforced when it contains such an inorganic binder.

In the case of the honeycomb catalyst 100 containing an inorganic binder, the amount of the inorganic binder is preferably 3 to 15 wt%.

The inorganic binder in an amount within the above range can suitably reinforce the honeycomb catalyst 100.

Preferably, the honeycomb catalyst 100 further contains at least one selected from the group consisting of inorganic fiber, a scaly material, a tetrapod-like material, and a three-dimensional acicular material to have enhanced strength.

The inorganic fiber is preferably at least one selected from the group consisting of alumina, silica, silicon carbide, silica alumina, glass, wollastonite, potassium titanate, and aluminum borate. The scaly material is preferably at least one selected from the group consisting of glass, muscovite, alumina, and silica. The tetrapod-like material is preferably zinc oxide. The three-dimensional acicular material is preferably at least one selected from the group consisting of alumina, silica, silicon carbide, silica alumina, glass, wollastonite, potassium titanate, aluminum borate, and boehmite.

The above materials are preferred as they have high heat resistance and do not erode, and thus can continue to function as a reinforcement when they are contained in honeycomb catalysts.

The honeycomb catalyst 100 preferably contains inorganic fiber, a scaly material, a tetrapod-like material, and/or a three-dimensional acicular material in an amount of 3 to 15 wt%. If the honeycomb catalyst 100 contains inorganic fiber, a scaly material, a tetrapod-like material, and/or a three-dimensional acicular material in an amount of less than 3 wt%, the effect of reinforcing the honeycomb catalyst 100 is small. If the honeycomb catalyst 100 contains inorganic fiber, a scaly material, a tetrapod-like material, and/or a three-dimensional acicular material in an amount of more than 15 wt%, it contains a smaller amount of a $TiO_2/V_2O_5/WO_3$ catalyst and thus has reduced NOx conversion ability.

The honeycomb catalyst 100 preferably has an aperture ratio of 50 to 85% in a cross section perpendicular to its longitudinal direction. If the honeycomb catalyst 100 has an aperture ratio of less than 50% in a cross section perpendicular to its longitudinal direction, the $TiO_2/V_2O_5/WO_3$ catalyst is not effectively utilized for NOx conversion. If the honeycomb catalyst 100 has an aperture ratio of more than 85% in a cross section perpendicular to its longitudinal direction, it has insufficient strength.

The honeycomb catalyst 100 includes the through holes 101 preferably at a density of 1.2 to 155 pcs/cm$^2$ in a cross section perpendicular to its longitudinal direction. If the honeycomb catalyst 100 includes the through holes 101 at a density of less than 1.2 pcs/cm$^2$ in a cross section perpendicular to its longitudinal direction, the $TiO_2/V_2O_5/WO_3$ catalyst is less likely to contact exhaust gas, reducing the NOx conversion ability. If the honeycomb catalyst 100 includes the through holes 101 at a density of more than 155 pcs/cm$^2$ in a cross section perpendicular to its longitudinal direction, it has a higher pressure loss.

The partitions 102 in the honeycomb catalyst 100 each have a thickness of preferably 0.1 to 2.5 mm, more preferably 0.1 to 0.3 mm. If the partitions 102 in the honeycomb catalyst 100 each have a thickness of less than 0.1 mm, the honeycomb catalyst 100 has reduced strength. If the partitions 102 in the honeycomb catalyst 100 each have a thickness of more than 2.5 mm, exhaust gas is less likely to permeate the partitions 102 of the honeycomb catalyst 100, failing to effectively utilize the $TiO_2/V_2O_5/WO_3$ catalyst for NOx conversion.

The method for manufacturing a honeycomb catalyst of the present invention will be described below by taking two methods for manufacturing the honeycomb catalyst 100 as examples.

(Method 1 for manufacturing honeycomb catalyst 100)

A method for manufacturing the honeycomb catalyst 100 includes: a mixing and kneading step of mixing and kneading titanium oxide, a vanadium material, and a tungsten material to prepare a kneaded mixture; a molding step of molding the kneaded mixture into a honeycomb shape to prepare a honeycomb molded body; and a firing step of firing the honeycomb molded body. The mixing and kneading step is preferably performed by mixing a tungsten material solution in which a tungsten material is dissolved, titanium oxide, and a vanadium material.

For manufacturing the honeycomb catalyst 100, the above method may include other steps, or the steps may be modified as needed.

(1) Mixing and kneading step

First, a tungsten material solution in which a tungsten material is dissolved, titanium oxide, and a vanadium material are mixed and kneaded to prepare a kneaded mixture.

In the (1) mixing and kneading step, titanium oxide and a tungsten material are not first kneaded. Instead, a tungsten material solution, titanium oxide, and a vanadium material are mixed. In microscopic observation of the particles forming the resulting kneaded mixture, the tungsten material and the vanadium material are likely to be evenly dispersed on the surface of the titanium oxide. Thus, presumably a honeycomb catalyst manufactured by the method for manufacturing a honeycomb catalyst of the present invention is less likely to contain W-O-W bonds and V-O-V bonds.

A process of first mixing titanium oxide with a vanadium material and then adding and mixing a tungsten material solution is undesirable because the vanadium material and the tungsten material are less likely to be evenly dispersed on the surface of the titanium oxide.

Moreover, the tungsten material to be used in the (1) mixing and kneading step is not solid but a solution in which the tungsten material is dissolved. This enables sufficiently uniform dispersion of the tungsten material and the vanadium material on the surface of the titanium oxide. Thus, a kneaded mixture can be prepared in which the vanadium material is fairly evenly distributed. A honeycomb catalyst manufactured from such a kneaded mixture is likely to contain highly dispersed vanadium. Thus, a honeycomb catalyst having sufficiently high NOx conversion ability for the amount of vanadium can be manufactured.

The tungsten material solution is preferably, but not particularly limited to, a solution of tungsten trioxide, ammonium paratungstate, ammonium metatungstate, or the like in an amine solution and/or water.

The (1) mixing and kneading step is preferably performed by dissolving a tungsten material which is solid in an amine solution and/or water to prepare a tungsten material solution; dissolving a vanadium material which is solid in an amine solution and/or water to prepare a vanadium material solution; and mixing the tungsten material solution, the titanium oxide, and the vanadium material solution.

In the case where the tungsten material and the vanadium material are solid, these materials or the like can be uniformly mixed when the respective materials are dissolved in solvents into a tungsten material solution and a vanadium material solution. Accordingly, a kneaded mixture can be prepared in which the vanadium material is fairly evenly distributed.

A honeycomb catalyst manufactured from such a kneaded mixture has sufficiently high NOx conversion ability for the amount of vanadium.

Furthermore, in the case of using an amine solution in the (1) mixing and kneading step, the amine solution is preferably, but not particularly limited to, a solution containing at least one selected from the group consisting of dimethylamine, methylamine, monoethanolamine, diethanolamine, trimethylamine, ethylamine, propylamine, and butylamine. Such an amine solution can readily dissolve the tungsten material and the vanadium material.

The use of the tungsten material solution and the vanadium material solution allows for manufacturing of a kneaded mixture in which the vanadium material is fairly evenly distributed as mentioned above. Thus, a honeycomb catalyst having sufficiently high NOx conversion ability for the amount of vanadium can be manufactured.

Furthermore, such an amine solution functions as a metal corrosion inhibitor.

The vanadium material to be used in the (1) mixing and kneading step is preferably, but not particularly limited to, at least one selected from the group consisting of ammonium metavanadate, vanadyl sulfate, and vanadyl oxalate. The vanadium material may be a solid vanadium material or a vanadium material solution in which a solid vanadium material is dissolved.

A honeycomb catalyst can be efficiently manufactured owing to good handleability of ammonium metavanadate, vanadyl sulfate, and vanadyl oxalate.

The titanium oxide to be used in the (1) mixing and kneading step is preferably, but not particularly limited to, anatase-type titanium oxide.

A honeycomb catalyst containing anatase-type titanium oxide is likely to have a large specific surface area and readily allows vanadium to be highly dispersed. Thus, a honeycomb catalyst having excellent NOx conversion ability can be manufactured.

The (1) mixing and kneading step may further include addition and mixing of an inorganic binder, inorganic fiber, a scaly material, a tetrapod-like material, a three-dimensional acicular material or the like as needed to prepare a kneaded mixture.

The kneaded mixture may further contain an organic binder, a dispersing medium, a molding aid, a lubricant, a metal corrosion inhibitor or the like appropriately as needed.

Non-limiting examples of the organic binder include methyl cellulose, carboxymethyl cellulose, hydroxyethyl cellulose, polyethylene glycol, phenol resin, and epoxy resin. One of these may be used alone, or two or more kinds thereof may be used in combination. The amount of the organic binder to be added is preferably 1 to 10 wt% relative to a total weight of titanium oxide, a vanadium material, a tungsten material, an inorganic binder, inorganic fiber, a scaly material, a tetrapod-like material, and a three-dimensional acicular material.

Non-limiting examples of the dispersing medium include water, organic solvents such as benzene, and alcohols such as methanol. One of these may be used alone, or two or more kinds thereof may be used in combination.

Non-limiting examples of the molding aid include ethylene glycol, dextrin, fatty acids, fatty acid soaps, and polyalcohols. One of these may be used alone, or two or more kinds thereof may be used in combination.

Non-limiting examples of the lubricant include sorbitan trioleate.

The kneaded mixture may be prepared by kneading the materials using a mixer, an attritor, or the like, or by kneading the materials using a kneader, or the like.

(2) Molding step

The kneaded mixture is extruded and molded into a honeycomb molded body in which a plurality of through holes are longitudinally in parallel with one another with partitions individually interposed therebetween.

Next, the honeycomb molded body is dried using a dryer such as a microwave dryer, a hot air dryer, a dielectric dryer, a reduced-pressure dryer, a vacuum dryer, or a freeze dryer to prepare a honeycomb dried body.

(3) Firing process

The honeycomb dried body is fired to provide a honeycomb fired body (honeycomb catalyst 100). The firing temperature is preferably 450°C to 750°C, more preferably 550°C to 650°C. If the firing temperature is lower than 450°C, sintering does not proceed, so that a resulting honeycomb fired body has a low strength. If the firing temperature is higher than 750°C, sintering proceeds excessively, reducing the reaction sites of the catalyst species.

The honeycomb catalyst 100, which is one embodiment of the honeycomb catalyst of the present invention, can be manufactured through the above steps.

(Method 2 for manufacturing honeycomb catalyst 100)

The honeycomb catalyst 100 can be manufactured not only by the "method 1 for manufacturing honeycomb catalyst 100" but also by a method in which the (1) mixing and kneading step in the "method 1 for manufacturing honeycomb catalyst 100" is modified as follows.

(1') Mixing and kneading step

First, a solid tungsten material, titanium oxide, and a vanadium material are mixed at one time.

The solid tungsten material is preferably, but not particularly limited to, at least one selected from the group consisting of tungsten trioxide, ammonium paratungstate, and ammonium metatungstate.

The vanadium material is preferably, but not particularly limited to, at least one selected from the group consisting of ammonium metavanadate, vanadyl sulfate, and vanadyl oxalate.

The titanium oxide is preferably anatase-type titanium oxide.

Next, an amine solution and/or water are/is add and kneaded to prepare a kneaded mixture.

Preparation of the kneaded mixture may further include addition and mixing of an inorganic binder, inorganic fiber, a scaly material, a tetrapod-like material, a three-dimensional acicular material or the like as needed.

The kneaded mixture may further be appropriately mixed with an organic binder, a dispersing medium, a molding aid, or the like as needed.

Desirable modes of these constituent materials are the same as those of the above-mentioned constituent materials of the honeycomb catalyst 100 or the like. Thus, descriptions thereof are omitted.

In the (1') mixing and kneading step, a solid tungsten material, titanium oxide, and a vanadium material are mixed at one time. In microscopic observation of the particles forming the resulting kneaded mixture, the tungsten material and the vanadium material are likely to be evenly dispersed on the surface of the titanium oxide. Thus, presumably a honeycomb catalyst manufactured by this method is less likely to contain W-O-W bonds and V-O-V bonds.

The effects of the honeycomb catalyst of the present invention will be described below.

(1) In the honeycomb catalyst of the present invention, the intensity of a peak attributable to a vanadium atom that is spaced by an interatomic distance of 2.4 to 2.5 Å from a tungsten atom is 0.05 Å or more in a radial distribution function per 1 wt% of the amount of the vanadium oxide in the honeycomb catalyst. The radial distribution function is obtained by Fourier transformation of an EXAFS spectrum in a K-absorption edge of the tungsten. Thus, the honeycomb catalyst of the present invention contains highly dispersed vanadium and a large amount of W-O-V bonds, whereby achieving sufficient NOx conversion ability.

(2) The honeycomb catalyst of the present invention contains vanadium oxide in an amount of 0.3 to 5.0 wt%. The honeycomb catalyst of the present invention contains a relatively large amount of W-O-V bonds although it contains a small amount of vanadium oxide. Thus, the honeycomb catalyst can make the most of vanadium so that it can exhibit high NOx conversion ability.

EXAMPLES

Specific embodiments of the present invention will be described by, but not limited to, the examples below.

(Example 1)

(Manufacturing of honeycomb catalyst)

(1) Mixing and kneading step

(1-1) Preparation of tungsten material solution

Ammonium metatungstate was dissolved in water to prepare an aqueous ammonium metatungstate solution as a tungsten material solution.

(1-2) Preparation of vanadium material solution

A vanadium material solution was prepared by dissolving 2.6 parts by weight of ammonium metavanadate in 3.1 parts by weight of monoethanolamine.

(1-3) Preparation of kneaded mixture

A kneaded mixture was prepared by mixing and kneading 81 parts by weight of anatase-type $TiO_2$ as titanium oxide, 5.7 parts by weight of the vanadium material solution as a vanadium material, the aqueous ammonium metatungstate solution as a tungsten material in an amount of 9 parts by weight in terms of ammonium metatungstate, 6.2 parts by weight of alumina sol as an inorganic binder, 3.5 parts by weight of glass fiber as inorganic fiber, 6.4 parts by weight of methyl cellulose as an organic binder, 1.7 parts by weight of sorbitan trioleate as a lubricant, and 17.9 parts by weight of deionized water.

(2) Molding step

Next, the kneaded mixture was extrusion-molded with an extruder into a square prism-shaped honeycomb molded body having a predetermined size. The honeycomb molded body was dried with a batch-type microwave dryer under a drying pressure of 86.7 kPa for 6 minutes to provide a honeycomb dried body.

(3) Firing step

Then, the honeycomb dried body was placed in a gas flow furnace and fired by increasing the temperature to 550°C at a temperature increase rate of 10°C/min and maintaining the temperature for 2 hours while introducing a gas mixture of 50 vol% of nitrogen and 50 vol% of air at a gas flow rate of 4 L/min, and whereby a honeycomb fired body was manufactured.
The resulting honeycomb fired body was used as a honeycomb catalyst in Example 1.
The honeycomb catalyst manufactured in Example 1 had a square prism shape with a size of 35 mm in height x 35 mm in width x 150 mm in length, and included through holes at a density of 77.5 pcs/cm$^2$ (500 cpsi) and partitions with a thickness of 0.2 mm.
The honeycomb catalyst manufactured in Example 1 contained 81.0 wt% of $TiO_2$, 2.0 wt% of $V_2O_5$, 9.0 wt% of $WO_3$, 4.5 wt% of an inorganic binder, and 3.5 wt% of inorganic fiber.

(Example 2)

A honeycomb catalyst of Example 2 was manufactured in accordance with the method for manufacturing the honeycomb catalyst in Example 1, except that the (1) mixing and kneading step was changed to the following (1') mixing and kneading step.

(1') Mixing and kneading step

(1'-1) Preparation of tungsten material solution

An aqueous ammonium metatungstate solution was prepared as a tungsten material solution by dissolving ammonium metatungstate in water.

(1'-2) Preparation of vanadium material solution

A vanadium material solution was prepared by dissolving 2.6 parts by weight of ammonium metavanadate in 3.1 parts by weight of monoethanolamine.

(1'-3) Preparation of kneaded mixture

A kneaded mixture was prepared by mixing and kneading 81 parts by weight of anatase-type $TiO_2$ as titanium oxide, 5.7 parts by weight of the vanadium material solution as a vanadium material, 10.2 parts by weight of ammonium metatungstate as a tungsten material, 6.2 parts by weight of alumina sol as an inorganic binder, 3.5 parts by weight of glass fiber as inorganic fiber, 7.1 parts by weight of methyl cellulose as an organic binder, 5.1 parts by weight of sorbitan trioleate as a lubricant, and 42.9 parts by weight of deionized water.
The honeycomb catalyst manufactured in Example 2 contained 81.0 wt% of $TiO_2$, 2.0 wt% of $V_2O_5$, 9.0 wt% of $WO_3$, 4.5 wt% of an inorganic binder, and 3.5 wt% of an inorganic fiber.

(Comparative Example 1)

A honeycomb catalyst of Comparative Example 1 was manufactured in accordance with the method for manufacturing the honeycomb catalyst in Example 1, except that the (1) mixing and kneading step was changed to the following (1a) mixing and kneading step.

(1a) Mixing and kneading step

(1a-1) Preparation of titanium oxide and tungsten material

A mixed oxide of titanium and tungsten (available from Crista Global, product name: DT52) (hereinafter also referred to as a titanium-tungsten mixed oxide), in which titanium oxide and a tungsten material were preliminary mixed, was prepared.

The titanium-tungsten mixed oxide contains $TiO_2$ and $WO_3$ at a weight ratio of $TiO_2:WO_3$ = 9:1. The $TiO_2$ is anatase-type $TiO_2$.

(1a-2) Preparation of vanadium material solution

A vanadium material solution was prepared by dissolving 2.6 parts by weight of ammonium metavanadate in 5.6 parts by weight of monoethanolamine.

(1a-3) Preparation of kneaded mixture

A kneaded mixture was prepared by mixing and kneading 90 parts by weight of the titanium-tungsten mixed oxide as titanium oxide and a tungsten material, 8.2 parts by weight of the vanadium material solution as a vanadium material, 6.2 parts by weight of alumina as an inorganic binder, 3.5 parts by weight of glass fiber as inorganic fiber, 5.8 parts by weight of methyl cellulose as an organic binder, 2.5 parts by weight of sorbitan trioleate as a lubricant, and 36.4 parts by weight of deionized water.

The honeycomb catalyst manufactured in Comparative Example 1 contained 81.0 wt% of $TiO_2$, 2.0 wt% of $V_2O_5$, 9.0 wt% of $WO_3$, 4.5 wt% of an inorganic binder, and 3.5 wt% of an inorganic fiber.

(EXAFS evaluation)

The honeycomb catalysts manufactured in Examples 1 and 2 and Comparative Example 1 each were partially crushed to prepare a pellet specimen having a diameter of 7 mm and a thickness of 1 mm.

The XAFSs of the specimens were analyzed using the XAFS analyzer (Beamline: BL5S1) in Aichi Synchrotron Radiation Center.

The measurement condition was as follows.

(1) Beamline

Energy range: 5 to 20 keV (0.25 to 0.06 nm)
Beam size: 0.50 mm x 0.30 mm (H x V)
Resolution (E/ΔE): 7000 @ 12 keV

(2) Detection system

Detector: 19-element germanium solid state detector (SSD) for fluorescent measurement, available from CANBERRA

The obtained data were processed with an XAFS analysis software "Athena (Demeter ver.0.9.13.1)" to give a radial distribution function obtained by Fourier transformation of the spectrum in a K-absorption edge of the tungsten in the honeycomb catalyst.

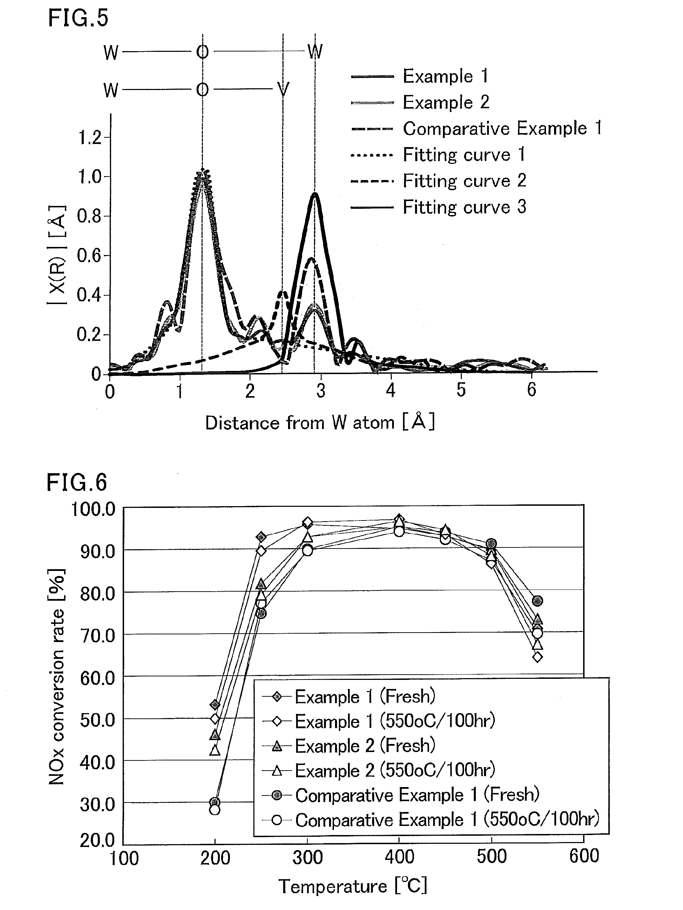

Fig. 5 is a diagram showing a radial distribution function obtained by Fourier transformation of a spectrum in a K-absorption edge of the tungsten, measured with an XAFS analyzer, in the honeycomb catalysts manufactured in Examples 1 and 2 and Comparative Example 1.

The data were further analyzed by curve-fitting using an XAFS analysis software "Artemis (Demeter ver.0.9.13.1)".

Table 1 shows the Iv and Iw in the radial distribution function of the honeycomb catalysts manufactured in Examples 1 and 2 and Comparative Example 1, the Iv per 1 wt% of the vanadium oxide, the Iw per 1 wt% of the tungsten oxide, and Iw/Iv.

In Fig. 5, the fitting curve 1 corresponds to the oxygen atom in W-O-V bonds and W-O-W-bonds contained in a reference material; the fitting curve 2 corresponds to the vanadium atom in W-O-V bonds contained in the reference material; and the fitting curve 3 corresponds to the tungsten atom in W-O-W bonds contained in the reference material.

(Evaluation of NOx conversion efficiency)

Square prismatic portions with a side length of 35 mm and a length of 40 mm were cut out of the respective honeycomb catalysts manufactured in Examples 1 and 2 and Comparative Example 1 to prepare specimens. While simulated gas at a temperature of 200°C, 250°C, 300°C, 400°C, 450°C, 500°C or 550°C was allowed to flow through these specimens at a space velocity (SV) of 60,000/hr, the amount of NOx flowing out of each specimen was measured with a catalyst test system SIGU-2000/MEXA-6000FT available from HORIBA, Ltd., and the NOx conversion rate (%) represented by the formula (1) below was calculated.

The NOx conversion rate was determined when the outlet concentrations of $N_3H$ and NOx reached saturation.

$$\texttt{(Amount of flow-in NOx - Amount of flow-out NOx)/(Amount of flow-in NOx)}$$

$$\texttt{× 100 ······· (1)}$$

The simulated gas consisted of 350 ppm of nitrogen monoxide, 350 ppm of ammonia, 5% of carbon dioxide, 10% of oxygen, 4.6% of water, and nitrogen (balance). Table 2 shows the result.

Fig. 6 is a plot diagram showing evaluation results of NOx conversion rates. The horizontal axis expresses the temperature of simulated gas, and the vertical axis expresses the NOx conversion rate.

The specimens were heated at 550°C for 100 hours with a catalyst durability tester SIGU-1000 available from HORIBA, Ltd. The NOx conversion rate (%) was determined as in the above-described evaluation of NOx conversion efficiency. Table 2 and Fig. 6 show the results.

(Evaluation of amount of hydrogen consumed for reducing vanadium)

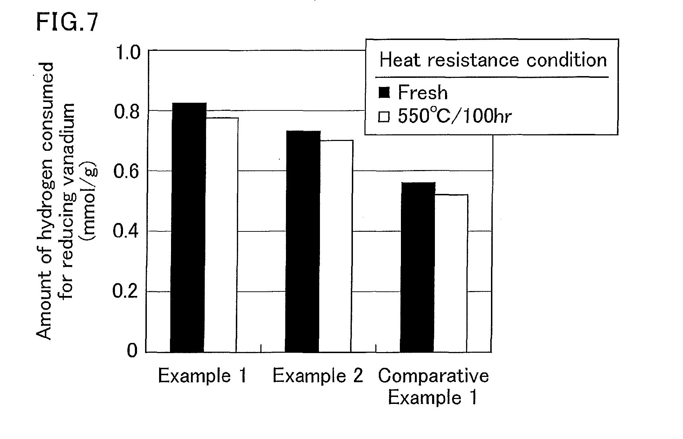

The honeycomb catalysts manufactured in Examples 1 and 2 and Comparative Example 1, and these honeycomb catalysts after fired at 550°C for 100 hours were subjected to $H_2$-TPR measurement as described below to determine the amount of hydrogen consumed for reducing vanadium. Fig. 7 shows the result. Fig. 7 is a diagram showing the results of measuring, by $H_2$-TPR, the amounts of hydrogen consumed for reducing vanadium in the honeycomb catalysts manufactured in Examples 1 and 2 and Comparative Example 1 and in these catalysts after they are heated at 550°C for 100 hours.

(1) Each honeycomb catalyst was ground into powder, and the powder was set in a furnace of a measuring system.
(2) Before measurement, Helium gas was introduced into the furnace at a flow rate of 50 $cm^3$/min. The temperature was increased from 100°C to 500°C at a temperature increasing rate of 10°C/min, followed by maintaining the temperature for 1 hour and decreasing to 100°C.
(3) Next, a gaseous mixture of $H_2$ (5.04%) and Ar (94.96%) was introduced into the furnace at a flow rate of 30 $cm^3$/min. The temperature was increased from 100°C to 700°C at a temperature increasing rate of 10°C/min, followed by maintaining the temperature for 20 minutes.
(4) Helium gas was introduced into the furnace at a flow rate of 50 $cm^3$/min, and the temperature was decreased to 100°C.
(5) The amount of hydrogen consumed for reducing vanadium was measured with a detector.

[Table 1]

|  | Example 1 | Example 2 | Comparative Example 1 |
|---|---|---|---|
| Iv (Å) | 0.160 | 0.146 | 0.080 |
| Iw (Å) | 0.298 | 0.336 | 0.569 |
| Iv per wt% of the amount of vanadium oxide (Å/wt%) | 0.080 | 0.073 | 0.040 |
| Iw per wt% of the amount of tungsten oxide (Å/wt%) | 0.033 | 0.037 | 0.063 |
| Iw/Iv | 1.86 | 2.30 | 7.11 |

[Table 2]

| | | NOx Conversion rate (%) | | | | | |
|---|---|---|---|---|---|---|---|
| | | Example 1 | | Example 2 | | Comparative Example 1 | |
| | | Not heated (Fresh) | Heated (550°C/100hr) | Not heated (Fresh) | Heated (550°C/100hr) | Not heated (Fresh) | Heated (550°C/100hr) |
| Temperature | 200°C | 53.1 | 49.8 | 46.1 | 42.4 | 29.8 | 28.2 |
| | 250°C | 92.8 | 89.5 | 81.8 | 79.1 | 74.7 | 77.1 |
| | 300°C | 95.7 | 96.3 | 92.8 | 92.8 | 89.9 | 89.5 |
| | 400°C | 94.7 | 96.8 | 95.0 | 96.4 | 95.1 | 93.9 |
| | 450°C | 92.8 | 93.2 | 92.9 | 94.3 | 93.7 | 92.0 |
| | 500°C | 89.4 | 86.2 | 89.6 | 88.1 | 90.9 | 87.0 |
| | 550°C | 70.8 | 64.0 | 73.0 | 67.1 | 77.3 | 69.6 |

As shown in Table 1, the Iv per 1 wt% of the vanadium oxide in Example 1 and that in Example 2 were as high as 0.080 Å/wt% and 0.073 Å/wt%, respectively. In contrast, the Iv in Comparative Example 1 was as low as 0.040 Å/wt%.

Also, the ratio Iw/Iv in Example 1 and that in Example 2 were as low as 1.86 and 2.30, respectively. In contrast, the ratio Iw/Iv in Comparative Example 1 was as high as 7.11.

As shown in Fig. 6 and Table 2, the honeycomb catalysts in Examples 1 and 2 highly efficiently converted NOx at a temperature from 200°C to 400°C. In particular, the honeycomb catalyst manufactured in Example 1 especially efficiently converted NOx at a temperature from 250°C to 300°C.

In contrast, the honeycomb catalyst manufactured in Comparative Example 1 inefficiently converted NOx at a temperature from 200°C to 400°C.

Furthermore, almost no change was observed in the NOx conversion efficiency between before and after the heat treatment of these honeycomb catalysts. Namely, the honeycomb catalysts manufactured in Examples 1 and 2 had sufficient heat resistance.

As shown in Fig. 7, in the honeycomb catalysts manufactured in Examples 1 and 2, the amount of hydrogen consumed for reducing vanadium was slightly reduced after the heat treatment but was still sufficiently high.

In contrast, in the honeycomb catalyst manufactured in Comparative Example 1, the amount of hydrogen consumed for reducing vanadium was low.

REFERENCE SIGNS LIST

| | |
|---|---|
| 100 | Honeycomb catalyst |
| 101 | Through hole |
| 102 | Partition |
| 103, 104 | End of honeycomb catalyst |

**Claims**

1. A honeycomb catalyst comprising: titanium oxide; vanadium oxide; and tungsten oxide,
the honeycomb catalyst containing the vanadium oxide in an amount of 0.3 to 5.0 wt%,
a peak attributable to a vanadium atom being spaced by an interatomic distance of 2.4 to 2.5 Å from a tungsten atom in a radial distribution function, the intensity of the peak being 0.05 Å or more in the radial distribution function per 1 wt% of the amount of the vanadium oxide in the honeycomb catalyst, the radial distribution function being obtained by Fourier transformation of an extended X-ray absorption fine structure (EXAFS) spectrum in a K-absorption edge of the tungsten in the honeycomb catalyst.

2. The honeycomb catalyst according to claim 1,
wherein a weight ratio between the vanadium oxide and the tungsten oxide, vanadium oxide:tungsten oxide, is 1:1 to 1:13.

3. The honeycomb catalyst according to claim 1 or 2,
wherein a ratio of vanadium atoms to tungsten atoms, tungsten atoms/vanadium atoms, in the honeycomb catalyst is 0.5 to 5.0.

4. The honeycomb catalyst according to any one of claims 1 to 3,
wherein, provided that, in the radial distribution function, the intensity of the peak attributable to a vanadium atom that is spaced by an interatomic distance of 2.4 to 2.5 Å from a tungsten atom is Iv, and the intensity of a peak attributable to a tungsten atom that is spaced by an interatomic distance of 2.85 to 2.95 Å from a tungsten atom is Iw, then a ratio Iw/Iv is 5.0 or lower.

5. The honeycomb catalyst according to any one of claims 1 to 4,
wherein the extended X-ray absorption fine structure (EXAFS) spectrum in a K-absorption edge of the tungsten is analyzed using an XAFS analysis software "Athena" to obtain the radial distribution function.

6. The honeycomb catalyst according to any one of claims 1 to 5,
wherein an amount of hydrogen consumed for reducing vanadium in hydrogen temperature-programmed reduction ($H_2$-TPR) is 0.6 mmol or more per gram of the honeycomb catalyst.

7. The honeycomb catalyst according to any one of claims 1 to 6, further comprising at least one inorganic binder selected from the group consisting of alumina sol, silica sol, titania sol, water glass, sepiolite, attapulgite, bentonite, and boehmite.

8. A method for manufacturing a honeycomb catalyst, comprising:

    a mixing and kneading step of mixing and kneading titanium oxide, a vanadium material, and a tungsten material to prepare a kneaded mixture;
    a molding step of molding the kneaded mixture into a honeycomb shape to prepare a honeycomb molded body; and
    a firing step of firing the honeycomb molded body,
    the mixing and kneading step comprising mixing a tungsten material solution in which the tungsten material is dissolved, the titanium oxide, and the vanadium material.

9. The method according to claim 8,
wherein the mixing and kneading step comprises:

    dissolving the tungsten material which is solid in an amine solution and/or water to prepare the tungsten material solution;
    dissolving the vanadium material which is solid in an amine solution and/or water to prepare a vanadium material solution; and
    mixing the tungsten material solution, the titanium oxide, and the vanadium material solution.

10. The method according to claim 9,
wherein the amine solution is a solution containing at least one selected from the group consisting of dimethylamine, methylamine, monoethanolamine, diethanolamine, trimethylamine, ethylamine, propylamine, and butylamine.

11. The method according to any one of claims 8 to 10,
wherein the tungsten material is at least one selected from the group consisting of tungsten trioxide, ammonium paratungstate, and ammonium metatungstate.

12. The method according to any one of claims 8 to 11,
wherein the vanadium material is at least one selected from the group consisting of ammonium metavanadate, vanadyl sulfate, and vanadyl oxalate.

13. The method according to any one of claims 8 to 12,
wherein the titanium oxide is anatase-type titanium oxide.

## FIG.1

## FIG.2

### (a)

### (b)

FIG.3

## FIG.4

(a)

(b)

A-A line cross-sectional view

## FIG.5

Legend:
— Example 1
— Example 2
--- Comparative Example 1
······ Fitting curve 1
---- Fitting curve 2
— Fitting curve 3

Y-axis: |X(R)| [Å]
X-axis: Distance from W atom [Å]

## FIG.6

Y-axis: NOx conversion rate [%]
X-axis: Temperature [°C]

Legend:
—◇— Example 1 (Fresh)
—◇— Example 1 (550oC/100hr)
—△— Example 2 (Fresh)
—△— Example 2 (550oC/100hr)
—◉— Comparative Example 1 (Fresh)
—○— Comparative Example 1 (550oC/100hr)

FIG.7

**INTERNATIONAL SEARCH REPORT**

| International application No. |
| --- |
| PCT/JP2015/052337 |

A.  CLASSIFICATION OF SUBJECT MATTER
*B01J23/30*(2006.01)i, *B01D53/94*(2006.01)i, *B01J37/00*(2006.01)i, *B01J37/04*(2006.01)i, *B01J37/08*(2006.01)i, *F01N3/10*(2006.01)i

According to International Patent Classification (IPC) or to both national classification and IPC

B.  FIELDS SEARCHED

Minimum documentation searched (classification system followed by classification symbols)
B01J23/30, B01D53/94, B01J37/00, B01J37/04, B01J37/08, F01N3/10

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho  1971–2015   Toroku Jitsuyo Shinan Koho   1994–2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 8-299791 A  (Mitsubishi Heavy Industries, Ltd.),<br>19 November 1996 (19.11.1996),<br>paragraphs [0011] to [0012]<br>(Family: none) | 1-6,8-13<br>7 |
| Y | JP 2013-91045 A  (Nippon Shokubai Co., Ltd.),<br>16 May 2013 (16.05.2013),<br>paragraphs [0013], [0025] to [0027]<br>(Family: none) | 7 |

☐  Further documents are listed in the continuation of Box C.          ☐  See patent family annex.

| * | Special categories of cited documents: |
| --- | --- |
| "A" | document defining the general state of the art which is not considered  to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    07 April 2015 (07.04.15) | Date of mailing of the international search report<br>    21 April 2015 (21.04.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**EP 2 939 735 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10323570 A